# EUROPEAN PATENT SPECIFICATION

(11) **EP 0 420 310 B1**
(45) Date of publication and mention of the grant of the patent: **06.10.1993**
(21) Application number: 90202265.6
(22) Date of filing: 23.08.1990
(51) Int. Cl.: A23N 7/02, C08B 30/10

(54) **A method and a device for extracting particulate matter from waste material**
Verfahren und Gerät zur Entfernung von teilchenförmigem Material aus Abfällen
Une méthode et un appareil pour l'extraction de matière particulaire à partir de déchets

(30) Priority: 26.09.1989 SE 8903166
(43) Date of publication of application: 03.04.1991
(73) Proprietor: LIMAS AB, S-29600 Ahus (SE)
(72) Inventor: Jönsson, Bo, S-296 00 Ahus (SE)
(74) Representative: Linde, Leif

(56) References cited:
- DE-A- 2 149 054
- US-A- 4 036 664
- DIE CHEMISCHE FABRIK, vol. 14, no. 21, October 1941, pages 359-370; H. RUMPELT: "Ein neuer Weg zur Beseitigung von Schälabwässern der Kartoffelverarbeitungsindustrie"

## Description

The present invention relates to a method and a device for extracting particulate matter from waste material produced when peeling vegetable products, especially for extracting starch from waste material produced when peeling root vegetables.

When peeling root vegetables by means of a mechanical peeling machine there is produced a waste material containing a high percentage of starch. For example, the peeling machine can be of the kind described in SE-B-448 668, i.e. a roller peeling machine in which the peeling action takes place by the engagement of the root vegetables with rotating rollers having a grinding coating of for example carborundum grits.

During the peeling water is supplied to the peeling machine, and this water carries away the waste material and the starch from the peeling machine. From economical as well as environmental point of view it is desirable as far as possible to take care of the starch leaving the peeling machine. The starch can be used for example as animal food and therefore represents an economical value. If the starch is supplied to the drain it will constitute a load on the environment and/or the purifying plants.

DE-A-2 149 054 describes a method and a device for extracting particulate matter from waste material produced when treating potatoes and the like. In this method and this device liquid containing the waste material including the particulate matter is conveyed to a moving filter belt for separating the waste material from the liquid. The liquid passing the filter belt contains particulate matter and the liquid including particulate matter is returned to the filter belt at a location thereof which is in the direction of movement of the belt positioned after the area where the waste material is initially supplied to the belt, the waste material forming on the filter belt a filter cake for the liquid returned to the belt for filtering particulate matter from the liquid. According to DE-A-2 149 054 the liquid including particulate matter is pressed from the filter belt by means of pressure belts engaging the waste material which has been supplied to the filter belt.

The object of the invention is to provide an improved method and an improved device for extracting particulate matter, especially starch, from waste material produced at the peeling of vegetable products, especially root vegetables.

The method according to the invention is characterized by the combination of steps defined in claim 1.

The device according to the invention is characterized by the feature defined in the characterizing portion of claim 4.

The invention provides for an extraction of the main portion of the particulate matter, preferably the starch, from the waste material to be used as for example animal food and provides for such an effective purification of the water supplied to the peeling machine that the water can without problems be supplied to the drain or can, if desired, be recirculated to the peeling machine.

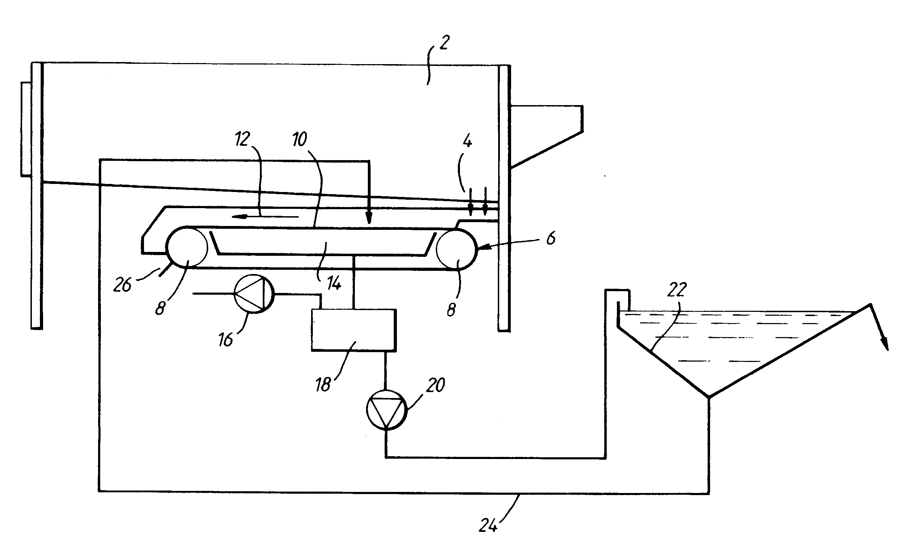

An embodiment of the invention is described in the following with reference to the accompanying drawing.

The drawing schematically shows a device according to the invention.

The device according to the invention is connected with a peeling machine 2 for root vegetables. In the embodiment shown in the drawing the peeling machine is of the kind which is the subject of the Swedish patent No 8601670-6 but can also be of a different kind. The waste material from the peeling machine 2 leaves the machine at 4 and is here supplied to a belt filter 6 consisting of a filter belt 10 passing over rollers 8. The direction of movement of the filter belt is shown by means of the arrow 12. Below the upper part of the filter belt 10 there is provided a vacuum box 14 by means of which liquid and small particles, in this case starch, are sucked from the waste material positioned on the filter belt. Preferably, the filter belt consists of a synthetic material having openings with a size of 1 mm and preferably the filter belt is moving on a screen plate. The vacuum in the vacuum box 14 is created by a vacuum pump 16 connected with the vacuum box 14 through a separator box 18 for separating air from water. In the separator box the air is separated from the water by the fact that the vacuum pump is connected with the upper side of the box and by the fact that a pump 20 for liquid is connected with the bottom of the box 18.

It can be mentioned that the separator box 18 is preferably provided with a level-control device controlling the function of the pump 20 so that the liquid level in the separator box 18 varies between predetermined limits.

The liquid in the box 18, said liquid containing a relatively large amount of starch particles, is sucked from the box and is supplied to a sedimentation vessel 22. In the sedimentation vessel the starch particles sink to the bottom, there being collected at the bottom liquid having a high percentage of starch particles. The liquid at the upper surface of the sedimentation vessel 22 is relatively free from starch particles and is allowed to leave the sedimentation vessel 22 by the vessel having an overflow at which the relatively clean liquid leaves the sedimentation vessel 22. The liquid leaving the sedimentation vessel can be supplied directly to a drain or can be recirculated to the peeling machine 2 to be re-used in the peeling process.

The liquid having a high percentage of starch and positioned at the bottom of the sedimentation vessel 22 is through a line 24 returned to the filter belt 10 at a point positioned after the area of the belt where the waste material from the peeling machine 2 is supplied to the belt. At the point where the liquid containing a high percentage of starch is supplied to the filter belt 10 from the sedimentation vessel 22 the filter belt 10 has a filtering cake formed by small pieces of root vegetables and particles, the filtering cake efficiently providing a separation of the starch from the liquid thus supplied.

At the end of the filter belt 10 there is provided a scraper 26 by means of which the cake formed on the belt is completely scraped off.

The invention can be modified within the scope of the following claims.

## Claims

1. A method of extracting particulate matter from waste material produced when peeling vegetable products in a peeling machine, especially for extracting starch from waste material produced when peeling root vegetables, comprising the following combination of steps:
conveying by means of liquid the waste material containing the particulate matter to a moving filter belt (10),
sucking away (at 14) liquid containing particulate matter from the moving filter belt (10), and
returning liquid containing particulate matter and sucked away from the filter belt (10) to the filter belt at a location thereof which is in the direction of movement of the belt positioned after the area (4) where the waste material from the peeling machine is supplied to the belt, the waste material forming on the filter belt (10) a filter cake for the liquid returned to the belt for filtering particulate matter from the liquid.

2. A method as claimed in claim 1, **characterized** in that the liquid containing particulate matter and sucked away form the filter belt (10) is supplied to a separator device (22) providing a liquid part having a high percentage of particulate matter and being returned to the filter belt as well as a liquid part having a low percentage of particulate matter.

3. A method as claimed in claim 2, **characterized** in that the liquid part having a low percentage of particulate matter is supplied to the peeling machine.

4. A device for extracting particulate matter from waste material produced when peeling vegetable products in a peeling machine (2), especially for extracting starch from waste material produced in peeling root vegetables, comprising a Movable filter belt (10) adapted to be supplied with the waste material containing the particulate matter by means of a liquid , and a recirculation system (18, 20, 22, 24) for returning liquid containing particulate matter having passed through the filter belt (10) to the filter belt at a location thereof which in the direction of movement of the belt is positioned after the point where the belt is adapted to be supplied with the waste material from the peeling machine, **characterized** by a vacuum box (14) positioned below the filter belt for sucking away liquid containing particulate matter from the filter belt.

5. A device as claimed in claim 4, **characterized** in that the recirculation system comprises a separation device (22) for providing a liquid part having a high percentage of particulate matter as well as a liquid part having a low percentage of particulate matter, the recirculation system being adapted to recirculate the liquid part having a high percentage of particulate matter to the filter belt (10).

6. A device as claimed in claim 5, **characterized** in that the separation device is constituted by a sedimentation vessel (22) the bottom of which is connected with a line (24) extending to the filter belt (10), the sedimentation vessel forming at its upper part an overflow for the liquid part having a low percentage of particulate material.

7. A device as claimed in claim 4 and 5, **characterized** in that the vacuum box (14) is connected with the upper portion of a separator box (18) having its upper portion connected with a vacuum pump (16) and its lower portion connected with a separation device (22).

8. A device as claimed in claim 7, **characterized** in that the separator box (18) is connected with the separation device (22) by means of a pump (20) which is connected with a level-control device for controlling the function of the pump so that the liquid level in the separator box varies within predetermined limits.

## Patentansprüche

1. Ein Verfahren der Gewinnung individueller Materie aus Abfallstoff, der beim Schälen von Gemüseprodukten in einer Schälmaschine anfällt, im besonderen zur Entziehung von Stärke aus Abfallstoff, der beim Schälen von Wurzelgemüse anfällt, umfassend die folgende Kombination von Schritten:
Fördern des Abfallstoffes, der die individuelle Materie enthält, zu einem sich bewegenden Filterband (10),
Absaugen (bei 14) der Flüssigkeit, die die individuelle Materie enthält, von dem sich bewegenden Filterband (10), und
Zurückbringen der Flüssigkeit, die die individuelle Materie enthält und von dem Filterband (10) abgesaugt wurde, zu dem Filterband an einen Ort davon, der sich in der Bewegungsrichtung des Bandes hinter dem Bereich (4), wo der Abfallstoff von der Schälmaschine dem Band zugeführt wird, befindet, der Abfallstoff bildet auf dem Filterband (10) einen Filterkuchen für die zum Band zurückgebrachte Flüssigkeit, um die individuelle Materie aus der Flüssigkeit zu filtern.

2. Ein Verfahren wie in Anspruch 1 beansprucht,
**dadurch gekennzeichnet**,
daß die Flüssigkeit, die die individuelle Materie enthält und von dem Filterband (10) abgesaugt wurde, einer Trennungsvorrichtung (22) zugeführt wird, die sowohl einen flüssigen Bestandteil liefert, der ein hohen Anteil an individueller Materie besitzt und zu dem Filterband zurückgebracht wird, als auch einen flüssigen Bestandteil, der einen geringen Anteil an individueller Materie besitzt.

3. Ein Verfahren wie im Anspruch 2 beansprucht,
**dadurch gekennzeichnet,**
daß der flüssige Bestandteil, der einen geringen Anteil an individueller Materie besitzt, der Schälmaschine zugeführt wird.

4. Eine Vorrichtung zum Entziehen individueller Materie aus Abfallstoff, der beim Schälen von Gemüseprodukten in einer Schälmaschine (2) anfällt, im besonderen zum Entziehen von Stärke aus Abfallstoff, der beim Schälen von Wurzelgemüse anfällt, die aus einem beweglichen Filterband (10), geeignet, um mit dem Abfallstoff, der die individuelle Materie enthält, mittels einer Flüssigkeit gespeist zu werden und einem Rückflußsystem (18, 20, 22, 24) zum Zurückbringen der Flüssigkeit, die die individuelle Materie enthält und das Filterband (10) durchflossen hat, zu dem Filterband an einen Ort davon, der sich in der Bewegungsrichtung des Bandes hinter dem Punkt befindet, wo das Band angepaßt ist, mit dem Abfallstoff von der Schälmaschine gespeist zu werden, besteht, gekennzeichnet durch eine Vakuumdose (14), die sich unter dem Filterband befindet, zum Absaugen der Flüssigkeit, die die individuelle Materie enthält, von dem Filterband.

5. Eine Vorrichtung wie in Anspruch 4 beansprucht,
**dadurch gekennzeichnet,**
daß das Rückflußsystem eine Trennvorrichtung (22), um sowohl einen flüssigen Bestandteil zu liefern, der einen hohen Anteil an individueller Materie besitzt, als auch einen flüssigen Bestandteil, der einen geringen Anteil an individueller Materie besitzt, das Rückflußsystem ist geeignet, den flüssigen Bestandteil, der einen hohen Anteil an individueller Materie besitzt, zu dem Filterband (10) zurückzuführen.

6. Eine Vorrichtung wie in Anspruch 5 beansprucht,
**dadurch gekennzeichnet,**
daß die Trennungsvorrichtung von einem Ablagerungsbecken (22) gebildet wird, dessen Boden mit einer Verbindung (24), die zu dem Filterband (10) läuft, verbunden ist, das Ablagerungsbecken bildet in seinem oberen Bereich einen Überlauf für den flüssigen Bestandteil, der einen geringen Anteil an individueller Materie besitzt.

7. Eine Vorrichtung wie in den Ansprüchen 4 und 5 beansprucht,
**dadurch gekennzeichnet,**
daß die Vakuumdose (14) mit dem oberen Teil eine Abscheiderkastens (18) verbunden ist, dessen oberer Teil in mit einer Vakuumpumpe (16) verbunden ist und dessen unterer Teil mit einer Trennungsvorrichtung (22) verbunden ist.

8. Eine Vorrichtung wie in Anspruch 7 beansprucht,
**dadurch gekennzeichnet,**
daß der Abscheiderkasten (18) mit der Trennungsvorrichtung (22) durch eine Pumpe (20) verbunden ist, die mit einem Pegelregelungsgerät zum Steuern der Funktion der Pumpe verbunden ist, so daß der Flüssigkeitsstand in dem Abscheiderkasten zwischen vorher bestimmten Grenzen schwankt.

## Revendications

1. Procédé pour extraire de la matière particulaire dans des déchets produits quand on épluche des légumes dans une éplucheuse, en particulier pour extraire de l'amidon de déchets produits quand on épluche des racines comestibles, comprenant l'association des étapes suivantes :
- acheminement, au moyen d'un liquide, des déchets contenant la matière particulaire à une courroie filtrante (10) en mouvement,
- retrait par aspiration (en 14) du liquide contenant la matière particulaire de la courroie filtrante (10) en mouvement, et
- renvoi du liquide contenant la matière particulaire et aspiré de la courroie filtrante (10) à la courroie filtrante, en un emplacement de celle-ci qui se trouve placé, dans la direction de mouvement de la courroie, après la région (4) où les déchets provenant de l'éplucheuse sont envoyés à la courroie, les déchets formant sur la courroie filtrante (10) une croûte de filtration pour le liquide renvoyé à la courroie, qui va filtrer la matière particulaire du liquide.

2. Procédé selon la revendication 1, **caractérisé** en ce que le liquide qui contient la matière particulaire et qui est aspiré de la courroie filtrante (10) est envoyé à un dispositif de séparation (22) donnant une partie liquide avec un fort pourcentage de matières particulaires qui est renvoyé à la courroie filtrante ainsi qu'une partie liquide contenant un faible pourcentage de matières particulaires.

3. Procédé selon la revendication 2, **caractérisé** en ce que la partie liquide contenant un faible pourcentage de matières particulaires est envoyée à l'éplucheuse.

4. Dispositif pour extraire de la matière particulaire dans des déchets produits quand on épluche des légumes dans une éplucheuse (2), en particulier pour extraire de l'amidon de déchets produits lors de l'épluchage de racines comestibles, comprenant une courroie filtrante (10) mobile, apte à être alimentée en déchets contenant la matière particulaire au moyen d'un liquide et un système de recirculation (18, 20, 22, 24) pour renvoyer le liquide contenant la matière particulaire et qui a traversé la courroie filtrante (10) à la courroie filtrante, en un emplacement de celle-ci qui se trouve placé, dans la direction de mouvement de la courroie, après le point où la courroie est apte à être alimentée en déchets provenant de l'éplucheuse, **caractérisé** par une boîte d'aspiration (14) placée en dessous de la courroie filtrante pour extraire par aspiration le liquide contenant la matière particulaire de la courroie filtrante.

5. Dispositif selon la revendication 4, **caractérisé** en ce que le système de recirculation comprend un dispositif de séparation (22) pour fournir une partie liquide contenant un fort pourcentage de matières particulaires ainsi qu'une partie liquide contenant un faible pourcentage de matières particulaires, le système de recirculation étant apte à remettre en circulation vers la courroie filtrante (10) la partie liquide contenant un fort pourcentage de matières particulaires.

6. Dispositif selon la revendication 5, **caractérisé** en ce que le dispositif de séparation est constitué par une cuve de sédimentation (22) dont le fond est relié à une canalisation (24) qui va jusqu'à la courroie filtrante (10), la cuve de sédimentation formant au niveau de sa partie supérieure un trop-plein pour la partie liquide contenant un faible pourcentage de matières particulaires.

7. Dispositif selon les revendications 4 et 5, **caractérisé** en ce que la boîte d'aspiration (14) est reliée à la partie supérieure d'une boîte de séparation (18) ayant sa partie supérieure reliée à une pompe à vide (16) et sa partie inférieure reliée à un dispositif de séparation (22).

8. Dispositif selon la revendication 7, **caractérisé** en ce que la boîte de séparation (18) est reliée au dispositif de séparation (22) au moyen d'une pompe (20) qui est connectée avec un dispositif de régulation du niveau pour commander le fonctionnement de la pompe de sorte que le niveau du liquide dans la boîte de séparation varie à l'intérieur de limites prédéterminées.
